# EUROPEAN PATENT SPECIFICATION

(11) **EP 3 132 167 B1**
(45) Date of publication and mention of the grant of the patent: **06.06.2018**
(21) Application number: 15722782.8
(22) Date of filing: 14.04.2015
(51) Int. Cl.: F16K 31/40

(54) **A SYSTEM FOR A PILOT OPERATED VALVE WITH BIDIRECTIONAL ISOLATION**
SYSTEM FÜR EIN PILOTGESTEUERTES VENTIL MIT BIDIREKTIONALER ISOLIERUNG
SYSTÈME POUR UNE VANNE PILOTE À ISOLEMENT BIDIRECTIONNEL

(30) Priority: 18.04.2014 IN 1403MU2014
(43) Date of publication of application: 22.02.2017
(73) Proprietor: ASCO CONTROLS B.V., 3925 BD Scherpenzeel (NL)
(72) Inventor: VAN KOMMER, Robbie, NL-3941 GB Doorn (NL); GUSTAFSSON, Morgan, S-43895 Hällingsjö (SE); VOSKUIJLEN, John, NL-3925 LS Scherpenzeel (NL); MANE, Amol Mahadeo, Pune Maharashtra 411017 (IN)
(74) Representative: EP&C
(86) International application number: PCT/NL2015/050241
(87) International publication number: WO 2015/160244

(56) References cited:
- WO-A1-90/08279
- WO-A1-99/14522
- CH-A- 511 386

## Description

### FIELD OF THE DISCLOSURE

The present disclosure relates to the field of a pilot operated valve with bidirectional isolation.

### DEFINITIONS

2/2 pilot operated solenoid valve is a 2 port and 2 position mechanical valve used to control the flow of fluid through a conduit while being actuated with external electric supply.

3/2 solenoid valve is 3 port 2 position mechanical valve used to control the flow of fluid through a conduit while being actuated with external electric supply.

### BACKGROUND

Valves are used to control the flow of fluids in conduits (see for instance WO-A-90/08279). The two main types of valves include manually operated and electrically operated. Solenoid valves belong to the category of electrically operated valves. Solenoid valves convert electrical energy into mechanical displacement of a plunger supporting a disc at one end which operationally opens and closes the passage of fluids from one conduit to another. The operation of the solenoid valve is observed in two states, 'Energized' and 'De-Energized'.

For a normally closed type solenoid valve attached to a conduit, the de-energized state blocks the flow of fluid from one partition to the other, whereas in an energized state the plunger lifts the disk from over the orifice thus allowing the flow from one partition to another. Traditionally, the use of solenoid valves is for controlling the flow of fluids in only a single direction. This limits its application in situations where the flow from both the directions needs to be controlled.

Hence there is a need for a system that alleviates the drawbacks associated with conventional methods and systems for bidirectional isolation.

### OBJECTS

Some of the objects of the system of the present disclosure, which at least one embodiment herein satisfies, are as follows:
It is an object of the present disclosure to ameliorate one or more problems of the prior art or to at least provide a useful alternative.

Another object of the present disclosure is to provide a system for a pilot operated valve with bidirectional isolation which controls the flow of fluids from either direction.

Yet another object of the present disclosure is to provide a system for a pilot operated valve with bidirectional isolation which is robust in construction.

A further object of the present disclosure is to provide a system for a pilot operated valve with bidirectional isolation which works for most types of fluids.

Yet another object of the present disclosure is to provide a system for a pilot operated valve with bidirectional isolation which makes use of pressure difference to operationally control the flow of fluids.

Still another object of the present disclosure is to provide a system for a pilot operated valve with bidirectional isolation which exhausts the residue fluid to any desired destination.

A further object of the present disclosure is to provide a system for a pilot operated valve with bidirectional isolation which is compact in construction and occupies less space.

Other objects and advantages of the present disclosure will be more apparent from the following description when read in conjunction with the accompanying figures, which are not intended to limit the scope of the present disclosure.

### SUMMARY

In accordance with the present disclosure there is provided a system for a pilot operated valve with bidirectional isolation, the system includes a first main conduit, a second main conduit configured to be in a fluid communication with the first main conduit, a diaphragm configured to control bidirectional flow of fluid between the first main conduit and the second main conduit, a 2/2 pilot operated solenoid valve operatively connected to the diaphragm, the 2/2 pilot operated solenoid valve configured to enable oscillatory movement of the diaphragm into a space defined between the diaphragm and the 2/2 pilot operated solenoid valve and a 3/2 solenoid valve configured to selectively allow a flow of fluid from the first main conduit and the second main conduit into the space to control the oscillatory movement of the diaphragm.

Typically, the system further includes an auxiliary conduit to facilitate bidirectional flow of fluid between the first main conduit and the third port of the 3/2 solenoid valve. Additionally, the system further includes a first main orifice and a second main orifice, wherein the first main orifice is defined on the first main conduit and the second main orifice is defined on the second main conduit. Also, the diaphragm includes a third orifice to allow the flow of fluid from the space to the first main conduit. Typically, the 2/2 pilot operated solenoid valve is connected to the third orifice by a first disk.

Additionally, the 3/2 valve includes a first port and a second port, the second port enables the flow of fluid selectively from the first port and the third port to the space. Typically, the second disk operationally controls the flow of fluid between the first port and the second port. Also, the system further includes a third disk, wherein the third disk operationally controls the flow of fluid between the third port and the second port.

### BRIEF DESCRIPTION OF ACCOMPANYING DRAWINGS

A system for a pilot operated valve with bidirectional isolation of the present disclosure will now be described with the help of the accompanying drawings, in which:
**Figure 1a** illustrates the sectional front view of a normally closed 2/2 pilot operated solenoid valve in a de-energized state attached to a conduit in accordance with the conventional system of blocking flow in a single direction;
**Figure 1b** illustrates the sectional front view of a normally closed 2/2 pilot operated solenoid valve in an energized state attached to a conduit in accordance with the conventional system of blocking flow in a single direction;
**Figure 2** illustrates the sectional front view of a system for a pilot operated valve with bidirectional isolation in accordance with an embodiment of the present disclosure;
**Figure 3a** illustrates the sectional front view of the bonnet of the pilot operated valve with bidirectional isolation of **Figure 2****;**
**Figure 3b** illustrates the sectional front view of the body of the pilot operated valve with bidirectional isolation of **Figure 2****;**
**Figure 4a** illustrates the sectional front view of the pilot operated valve with bidirectional isolation of **Figure 2** with energized first solenoid and de-energized second solenoid;
**Figure 4b** illustrates the sectional front view of the pilot operated valve with bidirectional isolation of **Figure 2** with energized first solenoid and energized second solenoid; and
**Figure 4c** illustrates the sectional front view of the pilot operated valve with bidirectional isolation of **Figure 2** with de-energized first solenoid and de-energized second solenoid.

### DETAILED DESCRIPTION OF THE ACCOMPANYING DRAWINGS

A system for a pilot operated valve with bidirectional isolation of the present disclosure will now be described in detail with reference to the accompanying drawings. The preferred embodiment does not limit the scope and ambit of the disclosure. The description provided is purely by way of example and illustration.

The embodiments herein and the various features and advantageous details thereof are explained with reference to the non-limiting embodiments in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The key disadvantage of using the traditional 2/2 pilot operated solenoid valve system in flow control through a conduit is its limitation of use in unidirectional flow control. The present disclosure introduces a solution to the above problem which uses two types of solenoid valves namely, '3/2 solenoid valve' and '2/2 pilot operated solenoid valve'. The primary difference between the two types of solenoid valves is the presence of an additional port which houses a bleed supply.

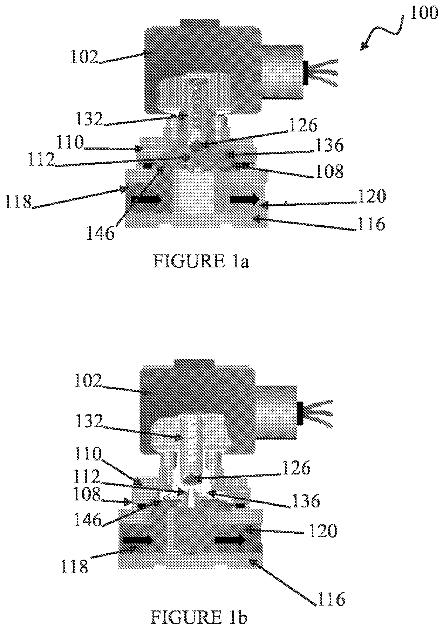

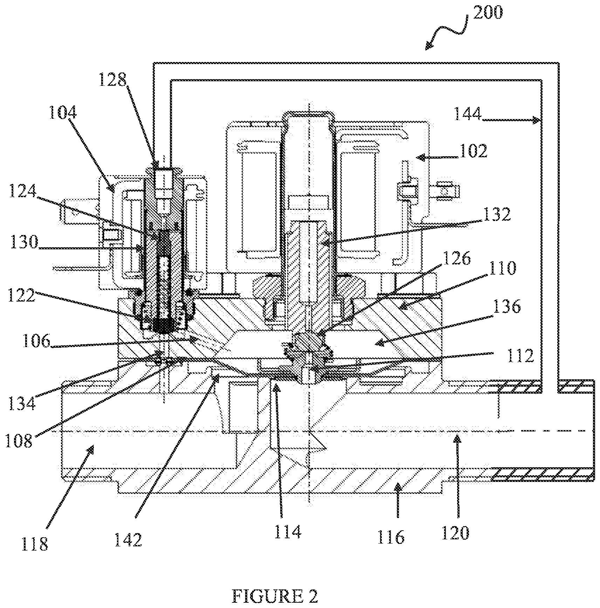

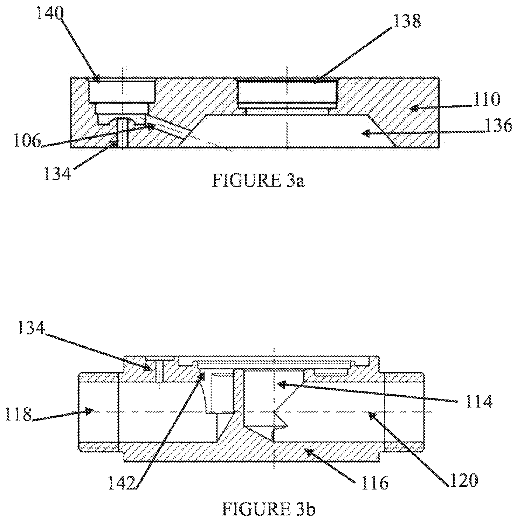

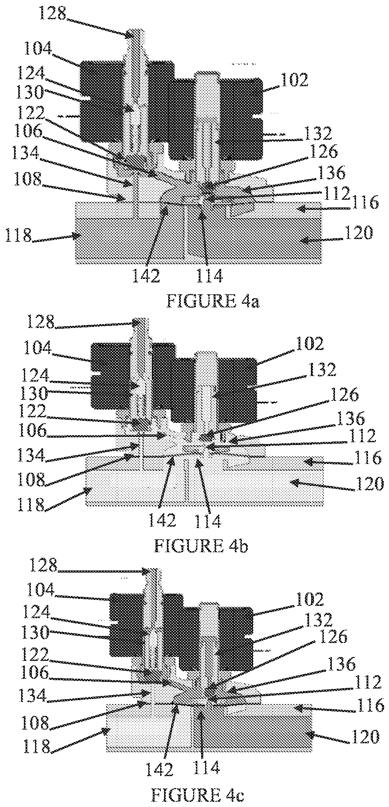

Referring to the accompanying drawings, **Figures 1a** and **1b** illustrate the energized and de-energized states of a 2/2 pilot operated solenoid valve used in controlling a unidirectional flow in accordance with a prior art and is generally represented with the reference numeral **100.** The system of a pilot operated valve with bidirectional isolation as illustrated in **Figure 2** is generally represented with the reference numeral 200. **Figures 3a** and **3b** illustrate the bonnet and the body of the system disclosed in the present disclosure. **Figures 4a, 4b** and **4c** illustrate different embodiments of the system disclosed in the present disclosure.

The 2/2 pilot operated solenoid valve as illustrated in **Figure 1a** is normally in the closed condition and in a de-energized state. The conduit is divided into two partitions with the attachment of solenoid valves represented with the numeral **120** for the first main conduit and **118** for the second main conduit. In the operationally closed condition, the fluid from the second main conduit **118** fills the empty space **136** through a bleed hole **146** of diaphragm **108** in the bonnet **110.** With the plunger **132** and the first disk **126** closing the third orifice **112** of the diaphragm **108,** the system lacks the necessary pressure difference required to lift the diaphragm **108** from its seat (i.e. the pressure from the fluid in the empty space **136** acting on the diaphragm **108** is greater than the pressure from the fluid in the first main conduit **120** acting on the diaphragm **108** and the pressure from the second main conduit **118** acting on the diaphragm **108**). Thus the flow of the fluid from the second main conduit **118** to the first main conduit **120** is blocked.

When the 2/2 pilot operated solenoid valve **102** is activated as illustrated in **Figure 1b****,** the plunger **132** gets lifted thus lifting the first disk **126** from its seat. This opens the third orifice **112** allowing the fluid to flow into the first main conduit **120.** This causes the pressure from the fluid in the empty space **136** acting on the diaphragm **108** to be lower than the pressure from the fluid via the first main orifice **114** and the second main orifice **118** acting on the diaphragm **108**, hence resulting in the diaphragm **108** to be lifted from its seat thus increasing the cross-section of flow from second main conduit **118** to first main conduit **120**. With the reversal of flow from the first main conduit **120** to the second main conduit **118**, the pressure from the fluid in the empty space **136** acting on the diaphragm **108** remains lower than the pressure from the fluid in the first main conduit **120** acting on the diaphragm **108**. This avoids the blocking required for the reverse flow. Hence there is a need for a system which will provide bidirectional isolation.

The construction of the system **200** includes three primary sections. The first section is the solenoid valves **102** and **104,** the second is the bonnet **110** (as illustrated in the **Figure 3a**) which provides seating **138** and **140** for attaching the solenoid valves **102** and **104** to the system **200** and the third is the body **116** (as illustrated in the **Figure 3b**) which includes the conduits **118** and **120** between which the solenoid valves **102** and **104** are attached. The bonnet **110** also provides for two smaller bleed supply lines hereafter referred to as the first port **134** and second port **106.** The seating **138** is further attached to an empty space **136.** The body **116** which includes the two main conduits **118** and **120** further includes their respective main orifices **142** and **114** respectively which open to the empty space **136.** The bonnet **110** acts as the cover to the body **116** and is commonly screwed to the body **116.** The system **200** is further provided with a diaphragm **108** which in the seated position covers the openings of the two orifices, the first main orifice **114** and the second main orifice **142.** The diaphragm further includes a third orifice **112** which oscillates as the diaphragm **108** oscillates within the empty space **136.**

The solenoid valve consists of the three main elements which are the windings, the spring and the plunger. The windings are coil windings which when energized and de-energized provide the oscillatory motion of the plunger within the casing of the solenoid valve. The spring helps apply a lateral force for the plunger. The plunger which optionally includes a blocking element attached at its operative end is responsible for operationally blocking and unblocking the openings of the conduits. For the present disclosure, the blocking element is a disk. The present disclosure uses three disks. The first disk **126** operatively opens and closes the opening of the third orifice **112.** The second disk **122** operatively opens and closes the opening of the first port **134.** The third disk operatively opens and closes the opening of the third port **128.** The system **200** when installed also includes an auxiliary conduit **144** which is attached between the first main conduit **120** to the third port **128.** Preferably, the diameter of the auxiliary conduit **144** is less than the diameter of the first main conduit **120** and also the diameter of second main conduit **118.**
The system **200** (as illustrated in **Figure 2**) disclosed in the present disclosure includes a combination of a 2/2 pilot operated solenoid valve **102** and a 3/2 solenoid valve **104.** These solenoid valves **102** and **104** are externally activated with electric switches (not shown). The construction allows for blocking the flow with the fluid flowing in either direction. According to one embodiment, the fluid flows from the second main conduit **118** to the first main conduit **120.**

In the embodiment where the two solenoid valves **102** and **104** are de-energized, the first disk **126** and the second disk **122** occupy their seats (not shown) on the bonnet **110.** With the second disk **122** on its seat, it closes the opening of the first port **134.** With this disconnect between the ports **134** and **106** the flow of the fluid is obstructed by the second disk **122.** The lateral movement of the plunger **130** unseats the third disk **124** thus freeing the flow from the third port **128** to the empty space **136.** The pressure difference between the two sides of the diaphragm **108** is negligible. Hence the flow of the fluid from the second main conduit **118** to the first main conduit **120** is isolated.

In an embodiment where both the valves **104** and **102** are energized, the disks **122** and **126** are lifted from their seats. This opens the connection between the conduits **134** and **106** and also opens the third orifice **112.** The flow of the fluid through the second main conduit **118** enters the first port **134,** the second port **106** and enters the empty space **136.** With the third orifice **112** open, the fluid flows through the third orifice **112** into the first main conduit **120.** The flow of the fluid through the third orifice **112** causes a pressure difference across the sides of the diaphragm **108** (i.e. the development of the high pressure by the fluid in the first main conduit **120** acting on the diaphragm **108** and low pressure by the fluid entered in the empty space **136** acting on the diaphragm **108**). This causes the diaphragm **108** to rise above its seat (not shown). This subsequently opens the connection between the second main orifice **142** and the first main orifice **114.** With the main orifices **142** and **114** now open, the flow reaches a steady state between the two conduits **118** and **120.**

In another embodiment where the 3/2 solenoid valve **104** is energized while the 2/2 pilot operated solenoid valve **102** is de-energized, the second disk **122** rises above its seat to allow the fluid to flow through the connection created between ports **134** and **106.** The fluid enters the empty space **136** but finds no outlet since the first disk **126** is placed in its seat. The upward movement of the plunger **130** causes the disk **124** to be seated in its seat thus blocking the connection between the third port **128** and the empty space **136.** The fluid entering the empty space **136** applies pressure on the diaphragm **108** thus preventing the diaphragm **108** from being unseated. Thus, the configuration causes a blockage for the fluid from flowing from the second main conduit **118** to the first main conduit **120.**

In a further embodiment where the 2/2 pilot operated solenoid valve **102** is energized and the 3/2 solenoid valve **104** is de-energized, the flow of the fluid from the second main conduit **118** finds no outlet with the disconnection between the first port **134** and the second port **106.**

According to another embodiment the flow of the fluid is reversed. According to this embodiment the flow takes places from the first main conduit **120** to the second main conduit **118.** In a state where the 2/2 pilot operated solenoid valve **102** is de-energized and the 3/2 solenoid valve **104** is de-energized the fluid flowing through the first main orifice **114** finds no outlet as the third orifice **112** is closed by the first disk **126.** With the de-energizing of the 3/2 solenoid valve **104** the third disk **124** is unseated. With this unseating of the third disk **124,** the fluid flowing through the third port **128** is let inside the empty space **136.** With the fluid in the empty space **136** applying pressure on a larger area in comparison with the fluid in the first main conduit **120** applying pressure through the first main orifice **114** area, the force acting for the diaphragm **108** to remain seated is greater than the force acting for the diaphragm **108** to be unseated. This disconnects the flow from the first main conduit **120** to the second main conduit **118** thus causing isolation.

According to another embodiment where the flow of the fluid is from the first main conduit **120** to the second main conduit **118** and the 2/2 pilot operated solenoid valve **102** is energized and the 3/2 solenoid valve **104** is energized, a pressure difference across the sides of the diaphragm **108** (i.e. the pressure of the fluid occupying the empty space **136** is less than the pressure applied by the fluid through the first main orifice **114**) causes the diaphragm **108** to rise from its seat. This connects the second main orifice **142** and the first main orifice **114** thus allowing the flow of the fluid from the first main conduit **120** to the second main conduit **118.**

In a yet another embodiment where the flow of the fluid is from the first main conduit **120** to the second main conduit **118** where the 2/2 pilot operated solenoid valve **102** is de-energized and the 3/2 solenoid valve **104** is energized, the plunger **130** of the 3/2 solenoid valve **104** lifts the disk **122** from its seat also causing the third disk **124** to seal the third port **128.** The flow of the fluid from the first main conduit **120** through the auxiliary conduit **144** is blocked at the third port **128.** The de-energizing of the 2/2 pilot operated solenoid valve **102** causes the first disk **126** to remain seated and hence blocking the third orifice **112.** Thus the absence of a pressure difference across the sides of the diaphragm **108** restricts the flow from the first main conduit **120** to the second main conduit **118.**

In accordance with the traditional system **100** of unidirectional flow control as illustrated in **Figure 1a** and **1b****,** the residue fluid in the space **136** above the diaphragm **108** is exhausted to the second main conduit **118.** The present disclosure allows the residue fluid in the space **136** above the diaphragm **108** to escape to at least one of first main conduit **120** through the auxiliary conduit **144** and the surrounding as per requirement. With the 3/2 solenoid valve **104** in the de-energized state, the disk **122** rests its seat disconnecting the path between the first port **134** and the second port **106.** This motion of the first plunger **130** causing the third disk **124** to be unseated creates a connection between the second port **106** and the third port **128.** According to one embodiment with the connection of the auxiliary conduit **144** to the third port **128,** the flow of the residue fluid is directed towards the first main conduit **120.**

In another embodiment with the absence of connection between the auxiliary conduit **144** with the first main conduit **120,** the flow of the residue fluid can be directed to any other destination as required. With the 3/2 solenoid valve **104** in the energized state, the disk **122** is lifted from its seat. With this motion of the plunger a connection is established between the first port **134** and the second port **106,** whereas the disk **124** gets seated disconnecting the path between the second port **106** and the third port **128.** Hence, the residue fluid above the diaphragm enters the second main conduit **118** through the path connection between the first port **134** and the second port **106.**

According to one embodiment as illustrated in **Figure 4a** a 3.5 bar pressure is applied to the second main conduit **118** while the first main conduit **120** carries atmospheric pressure. The 2/2 pilot operated solenoid valve **102** is de-energized and the 3/2 solenoid valve **104** is energized. The upward motion of the plunger **130** inside the casing of the 3/2 solenoid valve **104** causes the third disk **124** to close the flow through the third port **128** while establishing a connection between the first port **134** and the second port **106.** With the third orifice **112** blocked by the first disk **126,** the pressure of fluid inside the empty space **136** acts on the diaphragm **108** thus prevents it from getting unseated. This blocks the flow of fluid from the second main conduit **118** to the first main conduit **120.**

According to one embodiment as illustrated in **Figure 4b** a vacuum generator (not shown) is attached to the system **200** and actuated. The 3/2 solenoid valve **104** and the 2/2 pilot operated solenoid valve **102** are energized. This causes the plunger **132** to move laterally thus freeing the opening of the third orifice **112** and also the plunger **130** to move laterally to free the opening of the first port **134.** The flow of the fluid takes place from higher pressure to lower pressure which according to the current embodiment is from second main conduit **118** to first main conduit **120.** The fluid from second main conduit **118** enters the empty space **136** through first port **134** and second port **106.** The fluid in the empty space **136** travels through the third orifice **112** and enters the first main conduit **120.** This creates a low pressure in the empty space **136** causing the diaphragm **108** to rise from its seat and effectually connecting the first main orifice **114** to the second main orifice **142.** Thus with the activation of the vacuum generator and energizing the 3/2 solenoid valve **104** and 2/2 pilot operated solenoid valve **102** a vacuum is generated across both the conduits **118** and **120.**

According to one embodiment as illustrated in **Figure 4c****,** when 0.8 bar below atmospheric pressure is achieved in second main conduit **118,** de-energize the 3/2 solenoid valve **104** and the 2/2 pilot operated solenoid valve **102.** This action causes the lateral movement of the plungers **132** and **130** causing them to close the openings of the third orifice **112** and the opening of the first port **134** respectively. With the vacuum generator turned off, the system **200** is able to sustain low pressure in second main conduit **118** which is below atmospheric pressure. Thus system **200** is able to sustain high pressure to low pressure in either direction.

### TECHNICAL ADVANCEMENTS

The technical advancements offered by the present disclosure include the realization of:
- a system for a pilot operated valve with bidirectional isolation which controls the flow of fluids from either direction;
- a system for a pilot operated valve with bidirectional isolation which is robust in construction;
- a system for a pilot operated valve with bidirectional isolation which works for most types of fluids;
- a system for a pilot operated valve with bidirectional isolation which makes use of pressure difference to operationally control the flow of fluids;
- a system for a pilot operated valve with bidirectional isolation which does not exhaust the remainder fluid back to the inlet; and
- a system for a pilot operated valve with bidirectional isolation which is compact in construction and occupies less space.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the disclosure to achieve one or more of the desired objects or results.

The numerical values given of various physical parameters, dimensions and quantities are only approximate values and it is envisaged that the values higher or lower than the numerical value assigned to the physical parameters, dimensions and quantities fall within the scope of the disclosure unless there is a statement in the specification to the contrary.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

## Claims

1. A system for a pilot operated valve, said system comprising:
a first main conduit (120);
a second main conduit (118) configured to be in a fluid communication with said first main conduit;
a diaphragm (108) configured to control bidirectional flow of fluid between said first main conduit (120) and said second main conduit (118);
a 2/2 pilot operated solenoid valve (102) operatively connected to said diaphragm, said 2/2 pilot operated solenoid valve configured to enable oscillatory movement of said diaphragm into a space (136) defined between said diaphragm and said 2/2 pilot operated solenoid valve; and
a 3/2 solenoid valve (104);
**characterized in that** the system is suitable for a pilot operated valve with bidirectional isolation and **in that** the 3/2 solenoid valve (104) is configured to selectively allow a flow of fluid from said first main conduit (120) and said second main conduit (118) into said space (136) to control said oscillatory movement of said diaphragm (108).

2. The system as claimed in claim 1, further comprising an auxiliary conduit (144) to facilitate bidirectional flow of fluid between said first main conduit and a third port (128) of said 3/2 solenoid valve.

3. The system as claimed in one of the preceding claims, further comprising a first main orifice (114) and a second main orifice (142), wherein said first main orifice is defined on said first main conduit (120) and said second main orifice is defined on said second main conduit (118).

4. The system as claimed in one of the preceding claims, wherein said diaphragm comprises a third orifice (112) to allow the flow of fluid from said space (136) to said first main conduit.

5. The system as claimed in claim 4, wherein said 2/2 pilot operated solenoid valve (102) is connected to said third orifice (112) by a first disk (126).

6. The system as claimed in in one of the preceding claims, wherein said 3/2 solenoid valve (104) comprises a first port (134) and a second port (106), said second port (106) enables the flow of fluid selectively from said first port (134) and the third port (128) to said space (136).

7. The system as claimed in claim 6, further comprising a second disk (122), wherein said second disk operationally controls the flow of fluid between said first port (134) and said second port (106).

8. The system as claimed in one of the preceding claims, further comprising a third disk (124), wherein said third disk operationally controls the flow of fluid between the third port (128) and said second port (106).

## Patentansprüche

1. System für ein pilotgesteuertes Ventil, das System umfassend:
eine erste Hauptleitung (120);
eine zweite Hauptleitung (118), die dafür eingerichtet ist, mit der ersten Hauptleitung in Fluidverbindung zu stehen;
eine Membran (108), die dafür eingerichtet ist, einen bidirektionalen Fluidstrom zwischen der ersten Hauptleitung (120) und der zweiten Hauptleitung (118) zu steuern;
ein 2/2-pilotgesteuertes Solenoidventil (102), das mit der Membran operativ verbunden ist, wobei das 2/2-pilotgesteuerte Solenoidventil dafür eingerichtet ist, eine oszillierende Bewegung der Membran in einen zwischen der Membran und dem 2/2-pilotgesteuerten Solenoidventil definierten Raum (136) zu ermöglichen; und
ein 3/2-Solenoidventil (104),
**dadurch gekennzeichnet, dass** das System für ein pilotgesteuertes Ventil mit bidirektionaler Isolierung geeignet ist und das 3/2-Solenoidventil (104) dafür eingerichtet ist, selektiv einen Fluidstrom von der ersten Hauptleitung (120) und der zweiten Hauptleitung (118) in den Raum (136) zu erlauben, um die Oszillationsbewegung der Membran (108) zu steuern.

2. System nach Anspruch 1, das ferner eine Hilfsleitung (144) umfasst, um einen bidirektionalen Fluidstrom zwischen der ersten Hauptleitung und einem dritten Anschluss (128) des 3/2-Solenoidventils zu ermöglichen.

3. System nach einem der vorhergehenden Ansprüche, ferner umfassend eine erste Hauptöffnung (114) und eine zweite Hauptöffnung (142), wobei die erste Hauptöffnung an der ersten Hauptleitung (120) definiert ist und die zweite Hauptöffnung an der zweiten Hauptleitung (118) definiert ist.

4. System nach einem der vorhergehenden Ansprüche, wobei die Membran eine dritte Öffnung (112) aufweist, um den Fluidstrom von dem Raum (136) zu der ersten Hauptleitung zu ermöglichen.

5. System nach Anspruch 4, wobei das 2/2-pilotgesteuerte Solenoidventil (102) mit der dritten Öffnung (112) durch eine erste Scheibe (126) verbunden ist.

6. System nach einem der vorhergehenden Ansprüche, wobei das 3/2-Solenoidventil (104) einen ersten Anschluss (134) und einen zweiten Anschluss (106) umfasst, wobei der zweite Anschluss (106) den Fluidstrom selektiv von dem ersten Anschluss (134) und dem dritten Anschluss (128) zu dem Raum (136) ermöglicht.

7. System nach Anspruch 6, weiter umfassend eine zweite Scheibe (122), wobei die zweite Scheibe den Fluidstrom zwischen dem ersten Anschluss (134) und dem zweiten Anschluss (106) operativ steuert.

8. System nach einem der vorhergehenden Ansprüche, ferner umfassend eine dritte Scheibe (124), wobei die dritte Scheibe den Fluidstrom zwischen dem dritten Anschluss (128) und dem zweiten Anschluss (106) operativ steuert.

## Revendications

1. Système pour une vanne actionnée par pilote, ledit système comprenant :
un premier conduit principal (120) ;
un second conduit principal (118) configuré pour être en communication de fluide avec ledit premier conduit principal ;
un diaphragme (108) configuré pour contrôler l'écoulement bidirectionnel du fluide entre ledit premier conduit principal (120) et ledit second conduit principal (118) ;
une électrovanne 2/2 actionnée par pilote (102) raccordée, de manière opérationnelle, audit diaphragme, ladite électrovanne 2/2 actionnée par pilote étant configurée pour permettre le mouvement oscillatoire dudit diaphragme dans un espace (136) défini entre ledit diaphragme et ladite électrovanne 2/2 actionnée par pilote ; et
une électrovanne 3/2 (104) ;
**caractérisé en ce que** le système est approprié pour une vanne actionnée par pilote avec un isolant bidirectionnel et **en ce que** l'électrovanne 3/2 (104) est configurée pour permettre sélectivement un écoulement du fluide dudit premier conduit principal (120) et dudit second conduit principal (118) dans ledit espace (136) pour contrôler ledit mouvement oscillatoire dudit diaphragme (108).

2. Système selon la revendication 1, comprenant en outre un conduit auxiliaire (144) pour faciliter l'écoulement bidirectionnel du fluide entre ledit premier conduit principal et un troisième orifice (128) de ladite électrovanne 3/2.

3. Système selon l'une des revendications précédentes, comprenant en outre un premier orifice principal (114) et un deuxième orifice principal (142), dans lequel ledit premier orifice principal est défini sur ledit premier conduit principal (120) et ledit deuxième orifice principal est défini sur ledit second conduit principal (118).

4. Système selon l'une des revendications précédentes, dans lequel ledit diaphragme comprend un troisième orifice (112) pour permettre l'écoulement du fluide à partir dudit espace (136) vers ledit premier conduit principal.

5. Système selon la revendication 4, dans lequel ladite électrovanne 2/2 actionnée par pilote (102) est raccordée audit troisième orifice (112) par un premier disque (126).

6. Système selon l'une des revendications précédentes, dans lequel ladite électrovanne 3/2 (104) comprend un premier orifice (134) et un deuxième orifice (106), ledit deuxième orifice (106) permet l'écoulement du fluide sélectivement dudit premier orifice (134) et du troisième orifice (128) dans ledit espace (136).

7. Système selon la revendication 6, comprenant en outre un deuxième disque (122), dans lequel ledit deuxième disque contrôle, de manière opérationnelle, l'écoulement du fluide entre ledit premier orifice (134) et ledit deuxième orifice (106) .

8. Système selon l'une des revendications précédentes, comprenant en outre un troisième disque (124), dans lequel ledit troisième disque contrôle, de manière opérationnelle, l'écoulement du fluide entre le troisième orifice (128) et ledit deuxième orifice (106).
